# NEUE EUROPÄISCHE PATENTSCHRIFT

(11) **EP 1 611 663 B3**
(45) Veröffentlichungstag dieser Patentschrift: **28.12.2016**
(45) Hinweis auf die Patenterteilung: 12.10.2011
(21) Anmeldenummer: 04721459.8
(22) Anmeldetag: 18.03.2004
(51) Int. Cl.: H02K 35/06, H01H 13/48

(54) **ELEKTROMAGNETISCHER ENERGIEWANDLER**
ELECTROMAGNETIC ENERGY CONVERTER
CONVERTISSEUR D'ENERGIE ELECTROMAGNETIQUE

(30) Priorität: 07.04.2003 DE 10315764
(43) Veröffentlichungstag der Anmeldung: 04.01.2006
(60) Teilanmeldung: 10183879.5
(73) Patentinhaber: EnOcean GmbH, 82041 Oberhaching (DE)
(72) Erfinder: SCHMIDT, Frank, 82054 Altkirchen (DE)
(74) Vertreter: Grünecker Patent- und Rechtsanwälte PartG mbB
(86) Internationale Anmeldenummer: PCT/DE2004/000562
(87) Internationale Veröffentlichungsnummer: WO 2004/093300

(56) Entgegenhaltungen:
- WO-A-01/45123
- FR-A- 2 582 153
- US-A- 3 686 520
- US-A- 3 906 960
- US-A- 3 963 948
- US-A- 4 020 369
- US-A- 5 151 695

## Beschreibung

Die Erfindung betrifft einen elektromagnetischen Energiewandler umfassend zumindest einen Permanentmagneten, ein bewegliches Element, eine elektrische Spule, die zumindest einen Teil des Permanentmagneten oder des beweglichen Elements umschließt und die Verwendung eines solchen elektromagnetischen Energiewandlers bei Funkschaltern und Funksensoren.

Elektromagnetische Wandler sind in vielen Ausführungsformen zum Beispiel als Generatoren bekannt. Die Energieversorgung von elektrischen oder elektronischen Schaltkreisen, insbesondere von Kleinstschaltkreisen oder kleinen elektrischen Schaltungen in kleinen und kleinsten Geräten oder Bedienelementen, wie zum Beispiel Funkschaltern oder Funksensoren, wird häufig durch Batterie- und/oder Solarenergie, Akkumulatoren oder ähnlichem gebildet. Nachteilig an dieser Art und Weise, kleine oder miniaturisierte Schaltkreise oder kleine Bauteile mit Energie zu versorgen ist, dass der Energieversorger, die Batterie oder der Akku, oftmals ein Vielfaches des Raumes einnimmt, den der eigentliche elektronische Schaltkreis einnimmt und so der durch die Miniaturisierung gewonnene Raumvorteil wieder zunichte gemacht wird. Gleiches gilt für die Versorgung solcher Schaltkreise mit elektrischer Energie durch Solarzellen. Die Größe der Solarzellen übertrifft um ein Vielfaches die Größe des elektronischen Schaltkreises womit auch hier der durch die Miniaturisierung gewonnene Raumvorteil und damit oftmals auch der Gewichtsvorteil zunichte gemacht ist. Als weiterer wesentlicher Nachteil einer solchen Energieversorgung kommt noch hinzu, dass diese Systeme insbesondere, wenn sie mit batterie- oder akkugestützter Energieversorgung ausgestattet sind, nicht wartungsfrei sind. Denn insbesondere Batterien und Akkumulatoren unterliegen einer Alterung und müssen in vorbestimmten Zeitabständen erneuert werden. Zum Beispiel ein Funkschalter, wie er zum Beispiel als Bedienelement einer Kraftfahrzeugverriegelungsanlage mit Funksteuerung bekannt ist, enthält neben seinen elektronischen Komponenten, die die Funktechnik und einen Schaltkontakt bilden, eine Energieversorgung in Form eines Akkumulators oder einer Batterie. Der Schalter und der Akkumulator dürften wohl diejenigen Komponenten sein, die den größten Raumbedarf an diesem kleinen Gerät einnehmen. Auch der Gewichtsanteil dieser beiden Komponenten dürfte gegenüber der elektronischen Schaltung deutlich größer sein. Hinzu kommt, dass der Akkumulator auch während der Zeit in der der Funkschalter nicht benutzt wird, Energie speichern muss, die zu dieser Zeit nicht benötigt wird und als gespeicherte Energie vorgehalten wird.

In der Druckschrift US 5151695 A ist eine Messvorrichtung zur Erfassung von physikalischen Parametern einer Maschine mit sich periodisch bewegenden Teilen gezeigt. Die Messvorrichtung ist ausgebildet über die periodische Bewegung der Maschine ihre eigene Energie durch das Öffnen und Schließen eines magnetischen Kreises zu generieren. Dabei wird eine kontinuierliche elektrische Wechselspannung erzeugt. Mit dieser Wechselspannung wird ein Transmitter betrieben, der ein Funksignal erzeugt dessen Frequenz abhängig von dem physikalischen Umgebungsparameter ist.

In der Druckschrift FR 2 582 153 A1 ist ein elektromagnetischer Wandler gezeigt. Dieser umfasst einen magnetischen Kreis und eine elektrische Spule die zumindest einen Teil des magnetischen Kreises umschließt. Eine mechanische Vorrichtung ist mit einem Segment des elektromagnetischen Kreis derart gekoppelt, dass durch eine Einwirkung von thermischer Strahlung der magnetische Kreis durch herausnehmen des Segments geöffnet oder geschlossen wird. Der damit veränderte magnetische Fluss induziert eine elektrische Spannung in der elektischen Spule.

In der WO 01/45123 A1 ist eine Totpunktmechanik für eine Druckplatte beschrieben.

Die US 3,686,520 A offenbart einen "fluid-elektrischen" Generator. Dieser sieht vor, dass ein elektromagnetischer Energiewandler mit zumindest einem Permanentmagneten und einem beweglichen Element in Form eines Diafragmas vorgesehen ist, wobei eine elektrische Spule zumindest einen Teil des magnetischen Kreises umschließt. Die Bewegung des beweglichen Elements aus einer ersten Ruhelage oder einer zweiten Ruhelage heraus führt zu einer Öffnung oder Schließung eines durch den Permanentmagneten und dem beweglichen Element gebildeten magnetischen Kreises. Dabei wird das bewegliche Element durch magnetische Selbsthaltekräfte in der ersten und der zweiten Ruhelage gehalten.

Die in den Druckschriften US 5,151,695 A und FR 2 582 153 A1 gezeigten Wandler werden genauso wie die US 3,686,520 durch Energieformen angeregt, die von einem Anwender nicht direkt beeinflussbar sind. Dies ist im besonderen dann von Nachteil, wenn die elektrische Energie zur Versorgung von kleinen und kleinsten Geräten oder Bedienelementen, wie zum Beispiel Funkschaltern, benötigt wird.

Es ist die Aufgabe der Erfindung einen elektromagnetischen Wandler bereitzustellen, dem dieser Nachteil nicht anhaftet.

Diese Aufgabe wird erfindungsgemäß durch die in Patentanspruch 1 vorgeschlagenen Maßnahmen gelöst und in den darauf rückbezogenen Unteransprüchen vorteilhaft weitergebildet. Die Erfindung stellt weiterhin ein System nach Anspruch 12 bereit, das gemäß den davon abhängigen Ansprüchen weitergebildet werden kann.

Dabei ist zur Energieversorgung ein elektromagnetischer Energiewandler vorgeschlagen, mit zumindest einem Permanentmagneten und einer elektrischen Spule und einem beweglichen Element, wobei die Spule zumindest einen Teil des Permanentmagneten oder zumindest einen Teil des beweglichen Elementes umschließt. Dabei ist der elektromagnetische Energiewandler so gestaltet, dass durch eine Bewegung des beweglichen Elementes, einer durch den Permanentmagneten und das bewegliche Element gebildeter magnetischer Kreis sich schließt oder öffnet. Das Öffnen oder Schließen des magnetischen Kreises erfolgt dabei nicht in einer langsam ansteigenden stetigen Form, sondern im Grunde schlagartig ähnlich dem Schließen oder Öffnen eines Schalters. Durch diese Schlagartigkeit ergibt sich eine ebenso schlagartige Änderung des magnetischen Flusses die einen elektrischen Strom in der Spule induziert. Dieser elektrische Strom wird dann nachfolgend zur Energieversorgung eines nachgeschalteten elektronischen Schaltkreises, zum Beispiel den eines Funkschalters für Kraftfahrzeugverriegelungsanlagen verwendet.

In einer vorteilhaften Ausführungsform ist vorzugsweise das bewegliche Element aus einem weichmagnetischen Kern gebildet, und wird durch magnetische Selbsthaltekräfte in einer ersten oder zweiten Ruhelage gehalten. Die erste oder zweite Ruhelage können dabei entweder der geöffnete oder der geschlossene Zustand des magnetischen Kreises sein. Es ist dabei unerheblich, aus welcher Ausgangsposition beziehungsweise welche der beiden Stellungen die sogenannte Ruhelage einnimmt, da die Änderung des magnetischen Flusses, gleich wie gerichtet, immer einen elektrischen Strom induziert. Vorteilhaft ist, dass der elektrische Strom in seiner Polarität sich dadurch unterscheidet, ob er induziert wurde durch ein Schließen oder durch ein Öffnen des elektromagnetischen Kreises. Diese Zusatzinformation kann dem nachfolgenden Funksignal aufgeprägt werden, so dass damit zusätzliche Funktionalitäten realisierbar sind.

In einer weiteren vorteilhaften Ausführungsform, ist das bewegliche Element um ein Federelement derart erweitert, dass eine der beiden, durch das bewegliche Element einnehmbaren Lagen eine stabile Lage, zum Beispiel eine erste Ruhelage darstellt. Im Betätigungsfall wird das bewegliche Element dann entgegen einer Federkraft bewegt, bis beispielsweise der magnetische Kreis geöffnet oder geschlossen ist, beim Loslassen des beweglichen Elementes wird dieses durch die Federkraft wieder in die ursprüngliche Ruhelage zurückgedrückt, was wieder zu einem Öffnen beziehungsweise Schließen des magnetischen Kreises führt. Damit wird vorteilhaft zweimal, jeweils beim Öffnen und beim Schließen elektrischer Strom induziert, der im nachfolgenden elektronischen Schaltkreis als Versorgungsenergie verwendbar ist. Allein durch die Erweiterung um das Federelement verdoppelt sich die durch den elektromagnetischen Energiewandler erzeugte, elektrische Energie.

Es ist weiterhin, in einer vorteilhaften Ausführungsform, das bewegliche Element mit einer Totpunktmechanik in Verbindung mit dem Federelement ausgestattet, das heißt das bewegliche Element wird bei Überschreiten eines Totpunktes selbstständig und ohne weiteren Kraftaufwand seitens des Bedieners in die zweite Ruhelage bewegt, damit ist erreicht, dass unabhängig von der Geschwindigkeit, mit der ein Bediener das bewegliche Element bis zum Überschreiten des Totpunktes bewegt, die Intensität der Bewegung nach dem Überschreiten des Totpunktes immer gleich ist und damit die Intensität der induzierten elektrischen Energie auch immer gleich und damit systemimmanent optimiert und vom User unabhängig ist.

Es ist weiter vorteilhaft das bewegliche Element und das Federelement baulich zu vereinen, und darüber hinaus den Permanentmagnet aus zwei konzentrischen Ringen zu bilden, der über eine kreisförmige Bodenplatte verbunden ist, so dass die der Bodenplatte gegenüberliegende Seite der konzentrischen Ringe einen magnetischen Nordpol und einen magnetischen Südpol bildet. Es ist weiter vorteilhaft, insbesondere bei dieser Ausführungsform, das bewegliche Element in baulicher Einheit mit einem Federelement kuppelartig über die konzentrischen Ringe zu spannen und so einen kreisförmigen Energiewandler zu bilden. Beim Drücken des Federelementes, mittig in der kuppelartigen Form, wird beim Erreichen des Totpunktes die Kuppel federartig umschnappen, und dann den elektromagnetischen Kreis schließen und in ebensolcher Art und Weise wieder öffnen.

Wahlweise ist in einer vorteilhaften Ausführungsform einer der konzentrischen Ringe mit dem Federelement so verbunden, dass dieser mit dem Federelement bewegt wird. So dass elektrische Energie über die schlagartige Änderung des magnetischen Flusses hinaus, auch dadurch induziert wird, dass die elektrische Spule relativ zu einem Permanentmagnet bewegt wird. Am Anfang oder am Ende einer solchen Bewegung schließt oder öffnet sich der magnetische Kreis. Die Ausbeute an elektrischer Energie ist somit erhöht.

In einer vorteilhaften Ausführungsform sind die beiden konzentrischen Kreise beziehungsweise der elektromagnetische Energiewandler, der Größe einer Knopfzellenbatterie angeglichen. Der Energiewandler stellt, dem oben beschriebenen Prinzip folgend, Energie exakt dann zur Verfügung, wenn diese auch zur Ausführung einer Aktion benötigt wird. Ein solcher Energiewandler kann als aktionsbezogener Energiewandler bezeichnet werden. Ein platzraubendes Speichern von elektrischer Energie kann somit entfallen. Auch ein zusätzliches Schaltelement kann entfallen, da dies in Funktionseinheit mit dem Energiewandler gebildet ist. Da der erfindungsgemäße Energiewandler auch in miniaturisierter Form, in Form und Bauart einer Knopfzellenbatterie angeglichen werden kann, sind die Verwendungsmöglichkeiten nahezu unbegrenzt. Beispielhaft sei hier nur die Verwendung zur Energieversorgung von Funkschaltern genannt.

Vorzugsweise kann der Energiewandler auch noch kleiner als eine Knopfzellenbatterie, in jedem Fall kleiner als mit einem Durchmesser von 1,5 cm ausgeführt werden. Ein solcher Energiewandler eignet sich insbesondere zum Beispiel für die Anwendung von Funkschaltern.

Ein Anwender bedient einen Energiewandler in der Größe eines Knopfes, bei dem durch Drücken auf den Energiewandler mechanische Energie in elektrische Energie gewandelt wird, in dem der magnetische Kreis geschlossen wird. Die dadurch induzierte elektrische Energie wird sofort in einem elektronischen Schaltkreis zur Aussendung eines Funksignals verwendet, und dieses Funksignal löst in der Folge eine Aktion an einem Funkempfänger beziehungsweise an mit diesem verbundenen Geräten aus. Beispielhaft ist ein Verriegelungssystem eines Kraftfahrzeuges zu nennen.

Im folgenden ist die Erfindung anhand eines Ausführungsbeispiels und zwei Figuren näher erläutert.

Es zeigen:
- Figur 1: einen elektromagnetischen Energiewandler in einer Draufsicht und eine Spule
- Figur 2: einen elektromagnetischen Energiewandler in einem Zustand mit offenem und einem Zustand mit geschlossenem magnetischen Kreis.

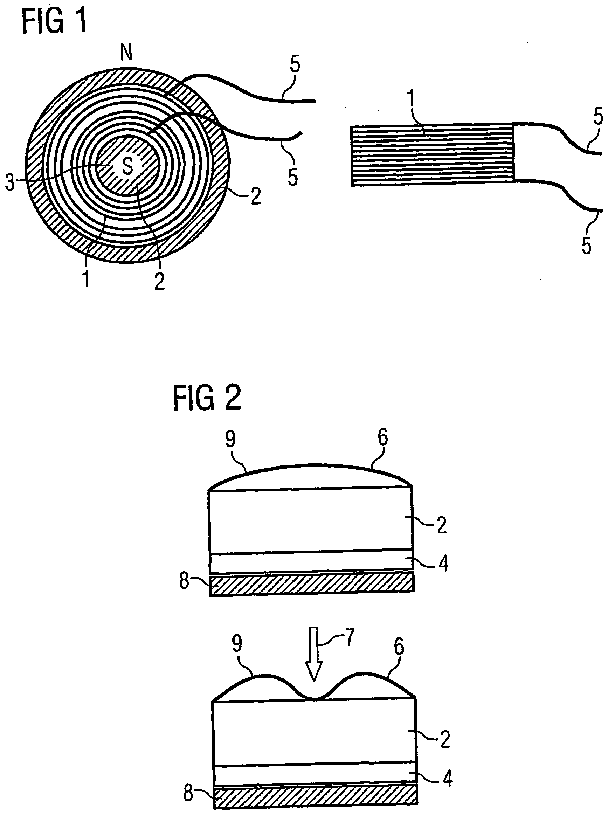

Die Darstellung in Figur 1 zeigt ein Ausführungsbeispiel des elektromagnetischen Energiewandlers in einer Draufsicht, wobei eine elektrische Spule 1 zwischen zwei konzentrischen Kreisen, gebildet aus einem Permanentmagneten 2, eingebettet ist. Einer der beiden konzentrischen Kreise ist dabei der von der Spule umfasste Teil 3 des Magnetkreises. Die Spule ist mit elektrischen Anschlüssen 5 versehen, die zu Weiterleitung des in der Spule induzierten elektrischen Stromes an einem Verbraucher 8 dienen. Zum Beispiel den in der Figur 2 schematisch dargestellten energieautarken Schalter in Form eines elektronischen Schaltkreises.

Die Figur 2 zeigt den elektromagnetischen Wandler der Figur 1 in einer Seitenansicht, mit einer kreisförmigen Bodenplatte 4 die, die in Form von konzentrischen Ringen gebildeten Permanentmagneten 2, miteinander verbindet. In der Figur 2 ist das Federelement und das bewegliche Element in einer baulichen Einheit gebildet, das gemäß eines Schnappers, nach Ausübung einer Kraft 7 umschnappt und damit den magnetischen Kreis schließt.

Energieautarke Funkschalter und Funksensoren können ohne einen Energiespeicher kurzzeitig betrieben werden, indem durch manuelle oder anderweitige mechanische Betätigung Energie zur Verfügung gestellt und mit einem nach dem elektromagnetischen Prinzip arbeitenden Wandler in nutzbare elektrische Energie umgewandelt wird.

Ein besonders vorteilhaftes Ausführungsbeispiel des Energiewandlers ermöglicht:
- Eine stark miniaturisierte Bauform zu realisieren
- Bei Krafteinwirkung und zusätzlich beim Nachlassen der Kraft Energie zu wandeln
- Eine von der Betätigungsgeschwindigkeit unabhängige Mindestenergie zu wandeln
- Mehrere verschiedene Schaltbefehle mit nur einem Energiewandler zu erzeugen

Figur 1 und Figur 2 zeigen ein solches Ausführungsbeispiel des Energiewandlers. Ein Permanentmagnet 2 befindet sich in einem Magnetkreis aus weichmagnetischem Material wie Eisen, Ferrit, oder Trafoblechen 3, 4. Dieser hat ein bewegliches Element 6, welches hier vorteilhaft in baulicher Einheit als bewegliches Federelement mit Totpunktmechanik ausgeführt ist. Diese verbindet rasch zwei magnetisch verschiedene Pole, sobald die ausgeübte Kraft 7 einen vorbestimmten Wert übersteigt. Wenn dies geschieht, schließt sich ein magnetisch gut leitfähiger Kreis, der zuvor durch einen Luftspalt geöffnet war. Dadurch wird eine rasche Änderung des von der Spule 1 umschlossenen Magnetflusses erreicht. Diese Änderung führt zur Induktion einer Spannung, die an den elektrischen Anschlüssen 5 entnommen und zur kurzzeitigen Versorgung einer Funkelektronik eingesetzt werden kann.

Wird also Kraft 7 auf dieses Element 6 ausgeübt, speichert diese die zugeführte Energie durch eine geringfügige Verformung, bis ein Totpunkt erreicht ist. Bei Überschreitung dieses Totpunktes schnappt die Feder relativ rasch in die zweite Lage, die auch eine labile Lage sein kann, in der sie entweder selbst oder über ein zusätzliches magnetisch leitendes Teil den magnetischen Kreis schließt. Dieses Umschnappen geschieht auch bei langsamer Erhöhung der Betätigungskraft mit einer minimalen Geschwindigkeit, die durch die Dimensionierung des Magnetkreises eingestellt werden kann. Auf diese Weise wird sichergestellt, daß auch bei langsamer Betätigung hinreichend Energie zum Betrieb des Funksensors/Funkschalters gewandelt wird. Beim Nachlassen der Betätigungskraft 7 kommt es zum umgekehrten Vorgang: der Magnetkreis wird plötzlich rasch unterbrochen, sobald der Totpunkt erreicht ist und das Federelement bzw. das bewegliche Element, in seinen stabilen Ruhezustand zurückschnappt. Es wird also sowohl beim Drücken als auch beim Loslassen des Energiewandlers Energie erzeugt.

Der magnetische Fluss durch den von der Spule 1 umwickelten Teil des Magnetkreises 3 ändert beim Schließen oder Öffnen des Magnetkreises seine Stärke. Diese rasche magnetische Flussänderung führt zu einer kurzzeitigen Spannungsinduktion in der Spule, und die so erzeugte elektrische Energie kann mit Gleichrichtern, vorzugsweise Halbleiter-Metallkontakt-Dioden gleichgerichtet und nach Zwischenspeicherung in einem Kondensator zum kurzzeitigen Betrieb eines Funkschalters oder Funksensors genutzt werden. Denkbar ist auch, mehrere Spulen zu verwenden, und auf eine Gleichrichtung der Energie, die insbesondere bei kleinen Spannungen hohe Verluste erzeugt, zu verzichten.

Die Polarität der erzeugten Spannung wechselt mit der Art der Betätigung. Diese Polarität ist von der angeschlossenen elektronischen Schaltung messbar und die darin enthaltene Information über die Richtung des Zustandswechsels mit dem auszusendenden Funksignal übertragbar.

Die Mechanik, welche auf den beweglichen Teil des Energiewandlers einwirkt, hat zumindest eine Betätigungseinrichtung, wie zum Beispiel eine Tasterfläche. Es können auch mehrere Betätigungseinrichtungen auf den einen Energiewandler in der gleichen Weise einwirken, wenn Funkschalter mit mehreren Kanälen realisiert werden sollen. In diesem Fall wird durch eine hinreichende Anzahl von Sensoren, zum Beispiel einen Sensor pro Betätigungseinrichtung, sichergestellt, daß die jeweils aktivierte Betätigungseinrichtung von der angeschlossenen Elektronik ermittelt wird. Die Information wird dann in das zu übertragende Funktelegramm eingebracht. Die angeschlossene Funkelektronik ist vorzugsweise in eine kompakte, miniaturisierte Einheit mit dem Energiewandler verbunden

Der magnetische Kreis ist konstruktiv beispielsweise so gestaltet, dass:
- eine Betätigung des beweglichen Teils zum Öffnen oder Schließen des Magnetkreises durch eine Feder oder ein anderes bewegliches magnetisch leitendes Bauteil führt.
- durch Verwendung einer Totpunktmechanik mit mindestens einem Federelement 9 zwei Zustände definiert sind, die bei Betätigung rasch wechseln
- durch dieses Federelement einer der beiden Zustände instabil gestaltet wird, so daß der bewegliche Teil des Magnetkreises nach dem Betätigen selbsttätig zurückschnappt, sobald die einwirkende Kraft einen konstruktiv vorgegebenen Wert unterschreitet
- wodurch ein Tastschalter realisiert werden kann, welcher beim Drücken wie auch beim Loslassen Energie wandelt.

Der mit dem Energiewandler betreibbare Funksender besitzt mindestens eine Betätigungseinrichtung, welches auf den Energiewandler mechanisch einwirkt. Besitzt er mehrere Betätigungseinrichtungen, wirken diese alle auf den einen Energiewandler und zusätzlich auf eine geeignete Anzahl Sensoren zur Detektion der jeweils aktivierten Betätigungseinrichtung. Die Informationen über die Identität des Betätigungsfeldes kann somit in das auszusendende Funksignal eingebracht werden.

Die Information über die Art der Betätigung (Drücken oder Loslassen bei Tastschaltern bzw. Drücken an verschiedenen Betätigungsflächen bei Kippschaltern) kann über die Polarität der erzeugten Spannung sensiert werden und ebenfalls mit dem Funksignal übertragen werden.

Die Funkelektronik zum Aussenden der Schaltinformation kann mit dem Energiewandler vorzugsweise zu einer baulich miniaturisierten, kompakten Einheit zusammengefasst werden.

### Bezugszeichenliste

- 1: elektrische Spule
- 2: Permanentmagnet
- 3: Teil des Magnetkreises, von el. Spule umfasst
- 4: Bodenplatte
- 5: elektrische Anschlüsse
- 6: bewegliches Element
- 7: Kraft
- 8: energieautarker Schalter, elektronische Schaltung
- 9: Federelement

## Patentansprüche

1. Verwendung eines elektromagnetischen Energiewandlers, wobei der elektromagnetische Energiewandler zumindest umfasst:
- einen Permanentmagneten (2) und
- ein bewegliches Element (6), wobei
- eine elektrische Spule (1)
zumindest einen Teil des Permanentmagneten (2) oder des beweglichen Elements (6) umschließt,
wobei eine Bewegung des beweglichen Elements (6) aus einer ersten Ruhelage, oder einer zweiten Ruhelage heraus, zu einer Öffnung oder zu einer Schließung eines durch den Permanentmagneten und dem beweglichen Element gebildeten magnetischen Kreises führt, und das bewegliche Element (6) durch magnetische Selbsthaltekräfte in der ersten oder der zweiten Ruhelage gehalten wird, wobei das bewegliche Element (6) mit einer Totpunktmechanik ausgestattet ist, welche ein rasches Öffnen oder Schließen des magnetischen Kreises bewirkt, sobald eine vorbestimmte, auf das bewegliche Element (6) einwirkende, Kraft überschritten ist;
wobei ein energieautarker Schalter (8), beispielsweise ein Funkschalter oder ein Signalgeber, durch den elektromagnetischen Wandler mit elektrischer Energie versorgt wird, und
die elektrische Energie in einem Kondensator gespeichert wird.

2. Verwendung eines elektromagnetischen Energiewandlers nach Patentanspruch 1,
wobei das bewegliche Element (6) aus einem weichmagnetischem Material gefertigt ist.

3. Verwendung eines elektromagnetischen Energiewandlers nach einem der vorhergehenden Patentansprüche,
wobei durch ein Federelement (9), die zweite Ruhelage instabil gestaltet wird, so daß nach einer Bewegung in die zweite Ruhelage das bewegliche Element (6) in die erste Ruhelage zurückkehrt.

4. Verwendung eines elektromagnetischen Energiewandlers nach einem der Patentansprüche 2 - 3,
wobei das weichmagnetische Material Eisen, Ferrit oder eine Nickel-Eisen-Legierung ist, oder sogenanntes Elektro- oder Trafoblech ist.

5. Verwendung eines elektromagnetischen Energiewandlers nach einem der vorhergehenden Patentansprüche 3 bis 4,
wobei das bewegliche Element (6) durch das Federelement (9) gebildet ist.

6. Verwendung eines elektromagnetischen Energiewandlers nach einem der vorhergehenden Patentansprüche,
wobei der Permanentmagnet (2) aus zwei konzentrischen Ringen gebildet ist, die über eine kreisförmige Bodenplatte (4) verbunden sind, so daß die der Bodenplatte (4) gegenüberliegende Seite der Ringe einen magnetischen Nordpol und einen magnetischen Südpol bildet.

7. Verwendung eines elektromagnetischen Energiewandlers nach Patentanspruch 6,
wobei einer der konzentrischen Ringe mit der Bodenplatte (4), der andere der konzentrischen Ringe mit dem beweglichem Element (6) verbunden ist.

8. Verwendung eines elektromagnetischen Energiewandlers nach einem der vorhergehenden Patentansprüche,
wobei die Öffnung des magnetischen Kreises durch einen Luftspalt gebildet ist.

9. Verwendung eines elektromagnetischen Energiewandlers nach einem der vorhergehenden Patentansprüche,
wobei die Größe des elektromagnetischen Wandlers, in einer miniaturisierten Ausführung, im Durchmesser kleiner oder gleich 1,5 cm ist.

10. Verwendung eines elektromagnetischen Energiewandlers gemäß einem der vorhergehenden Patentansprüche,
wobei die elektrische Energie mit Gleichrichtern, vorzugsweise Halbleiter-Metallkontakt-Dioden gleichgerichtet wird.

11. Verwendung eines elektromagnetischen Energiewandlers gemäß einem der vorhergehenden Patentansprüche,
wobei der energieautarke Schalter (8), beziehungsweise der Funkschalter oder der Signalgeber, mit dem elektromagnetischen Wandler baulich verbunden ist.

12. System mit einem Energiewandler und einem mit dem Energiewandler betreibbaren Funksender, wobei der Funksender mindestens eine Betätigungseinrichtung besitzt, welche auf den Energiewandler mechanisch einwirkt, und wobei der elektromagnetische Energiewandler zumindest umfasst:
- einen Permanentmagneten (2) und
- ein bewegliches Element (6), wobei
- eine elektrische Spule (1)
zumindest einen Teil des Permanentmagneten (2) oder des beweglichen Elements (6) umschließt,
wobei eine Bewegung des beweglichen Elements (6) aus einer ersten Ruhelage, oder einer zweiten Ruhelage heraus, zu einer Öffnung oder zu einer Schließung eines durch den Permanentmagneten und dem beweglichen Element gebildeten magnetischen Kreises führt, und das bewegliche Element (6) durch magnetische Selbsthaltekräfte in der ersten oder der zweiten Ruhelage gehalten wird, wobei das bewegliche Element (6) mit einer Totpunktmechanik ausgestattet ist, welche ein rasches Öffnen oder Schließen des magnetischen Kreises bewirkt, sobald eine vorbestimmte, auf das bewegliche Element (6) einwirkende, Kraft überschritten ist,
wobei Information über die Art der Betätigung über die Polarität der erzeugten Spannung sensiert und mit dem Funksignal übertragen wird.

13. System nach Anspruch 12, wobei der Funksender mehrere Betätigungseinrichtungen besitzt, welche alle auf den Energiewandler einwirken, und zusätzlich auf Sensoren zur Detektion der jeweils aktivierten Betätigungseinrichtung, und wobei die Informationen über die Identität des Betätigungsfeldes in das auszusendende Funksignal eingebracht werden.

14. System nach Anspruch 12 oder 13, wobei die Art der Betätigung ein Drücken oder Loslassen bei einem Tastschalter oder ein Drücken an verschiedenen Betätigungsflächen bei einem Kippschalter umfasst.

## Claims

1. Use of an electromagnetic energy converter, wherein the electromagnetic energy converter comprising at least
- one permanent magnet (2) and
- a moving element (6), wherein
- an electrical coil (1)
surrounds at least a part of the permanent magnet (2) or of the moving element (6),
wherein any movement of the moving element (6) from a first rest position or from a second rest position leads to opening or to closing of a magnetic circuit which is formed by the permanent magnet and the moving element, and the moving element (6) is held in the first or the second rest position by magnetic latching forces,
wherein the moving element (6) is provided with a dead-center mechanism, which results in rapid opening or closing of the magnetic circuit as soon as a predetermined force acting on the moving element (6) is exceeded,
wherein an autonomous-power switch (8), for example a radio switch or a signal transmitter, is supplied with electrical power by the electromagnetic converter, and
the electrical power is stored in a capacitor.

2. Use of an electromagnetic energy converter according to patent claim 1,
wherein the moving element (6) is manufactured from a soft-magnetic material.

3. Use of an electromagnetic energy converter according to either of the preceding patent claims,
wherein a spring element (9) makes the second rest position unstable, so that the moving element (6) returns to the first rest position after a movement to the second rest position.

4. Use of an electromagnetic energy converter according to either of patent claims 2 and 3,
wherein the soft-magnetic material is iron, ferrite or a nickel/iron alloy, or so-called electrical or transformer laminate.

5. Use of an electromagnetic energy converter according to either of the preceding patent claims 3 and 4,
wherein the moving element (6) is formed by the spring element (9).

6. Use of an electromagnetic energy converter according to one of the preceding patent claims,
wherein the permanent magnet (2) is formed from two concentric rings which are connected via a circular base plate (4), so that that face of the rings which is opposite the base plate (4) forms a magnetic north pole and a magnetic south pole.

7. Use of an electromagnetic energy converter according to patent claim 6,
wherein one of the concentric rings is connected to the base plate (4) and the other of the concentric rings is connected to the moving element (6).

8. Use of an electromagnetic energy converter according to one of the preceding patent claims,
wherein the opening in the magnetic circuit is formed by an air gap.

9. Use of an electromagnetic energy converter according to one of the preceding patent claims,
wherein a miniaturized version of the electromagnetic converter has a diameter of less than or equal to 1.5 cm.

10. Use of an electromagnetic energy converter according to one of the preceding patent claims,
wherein the electrical power is rectified by rectifiers, preferably semiconductor metal-contact diodes.

11. Use of an electromagnetic energy converter according to one of the preceding patent claims,
wherein the autonomous-power switch (8), or the radio switch or the signal transmitter, is physically connected to the electromagnetic converter.

12. System comprising an energy converter and a radio transmitter that is operable with the energy converter, wherein the radio transmitter has at least one actuating device that mechanically acts on the energy converter, and wherein the electromagnetic energy converter comprises at least
- one permanent magnet (2) and
- a moving element (6), wherein
- an electrical coil (1)
surrounds at least a part of the permanent magnet (2) or of the moving element (6),
wherein any movement of the moving element (6) from a first rest position or from a second rest position leads to opening or to closing of a magnetic circuit which is formed by the permanent magnet and the moving element, and the moving element (6) is held in the first or the second rest position by magnetic latching forces,
wherein the moving element (6) is provided with a dead-center mechanism, which results in rapid opening or closing of the magnetic circuit as soon as a predetermined force acting on the moving element (6) is exceeded,
wherein information on the type of actuation is sensed via the polarity of the generated voltage and is transmitted with remote signal.

13. System according to patent claim 12, wherein the radio transmitter has a plurality of actuating devices that all act on the energy converter and additionally on sensors for detecting the respective activated actuation device, wherein the information on the identity of the actuation region is included in the radio signal to be transmitted.

14. System according to patent claim 12 or 13, wherein the type of actuation comprises a pushing or releasing of a push-switch or a pushing on different actuation regions of a toggle switch.

## Revendications

1. Utilisation d'un convertisseur d'énergie électromagnétique, le convertisseur d'énergie électromagnétique comprenant au moins
- un aimant permanent (2) et
- un élément (6) mobile,
- une bobine (1) électrique
entourant au moins une partie de l'aimant permanent (2) ou de l'élément (6) mobile,
un déplacement de l'élément (6) mobile à partir d'une première position de repos, ou d'une seconde position de repos, entraînant une ouverture ou une fermeture d'un circuit magnétique formé par l'aimant permanent et l'élément mobile, et
l'élément (6) mobile étant maintenu par des forces magnétiques d'automaintien dans la première ou la seconde position de repos,
l'élément (6) mobile étant équipé d'un mécanisme de point mort, qui entraîne une ouverture ou une fermeture rapide du circuit magnétique dès qu'une force prédéfinie, agissant sur l'élément (6) mobile, est dépassée;
un commutateur (8) indépendant en énergie, par exemple un commutateur radio ou un générateur de signaux, étant alimenté en énergie électrique par le convertisseur électromagnétique; et
l'énergie électrique étant stockée dans un condensateur.

2. Utilisation d'un convertisseur d'énergie électromagnétique selon la revendication 1,
dans laquelle
l'élément (6) mobile est fabriqué à base d'un matériau magnétique doux.

3. Utilisation d'un convertisseur d'énergie électromagnétique selon l'une quelconque des revendications précédentes,
dans laquelle
la seconde position de repos est conçue de manière à être instable par le biais d'un élément de ressort (9), de sorte que, après un déplacement dans la seconde position de repos, l'élément (6) mobile revient dans la première position de repos.

4. Utilisation d'un convertisseur d'énergie électromagnétique selon l'une quelconque des revendications 2 et 3,
dans laquelle
le matériau magnétique doux est du fer, de la ferrite ou un alliage de nickel et de fer, ou de la tôle électrique ou de la tôle pour transformateurs.

5. Utilisation d'un convertisseur d'énergie électromagnétique selon l'une quelconque des revendications précédentes 3 et 4,
dans laquelle
l'élément (6) mobile est formé par l'élément de ressort (9).

6. Utilisation d'un convertisseur d'énergie électromagnétique selon l'une quelconque des revendications précédentes,
dans laquelle
l'aimant permanent (2) est formé de deux bagues concentriques, qui sont reliées par une plaque de fond (4) de forme circulaire, de sorte que le côté, opposé à la plaque de fond (4), des bagues forme un pôle nord magnétique et un pôle sud magnétique.

7. Utilisation d'un convertisseur d'énergie électromagnétique selon la revendication 6,
dans laquelle
l'une des bagues concentriques est reliée à la plaque de fond (4) et l'autre des bagues concentriques à l'élément (6) mobile.

8. Utilisation d'un convertisseur d'énergie électromagnétique selon l'une quelconque des revendications précédentes,
dans laquelle
l'ouverture du circuit magnétique est formée par un entrefer.

9. Utilisation d'un convertisseur d'énergie électromagnétique selon l'une quelconque des revendications précédentes,
dans laquelle
la grandeur du convertisseur électromagnétique, dans une version miniaturisée, est inférieure ou égale en diamètre à 1,5 cm.

10. Utilisation d'un convertisseur d'énergie électromagnétique selon l'une quelconque des revendications précédentes,
dans laquelle l'énergie électrique est redressée avec des redresseurs, de préférence des diodes à contact métallique à semi-conducteurs.

11. Utilisation d'un convertisseur d'énergie électromagnétique selon l'une quelconque des revendications précédentes,
dans laquelle
le commutateur (8) indépendant en énergie, respectivement le commutateur radio ou le générateur de signaux, est relié au niveau de la construction au convertisseur électromagnétique.

12. Système comprenant un convertisseur d'énergie et un émetteur radio utilisable avec le convertisseur d'énergie, l'émetteur radio comportant au moins un dispositif d'actionnement qui agit mécaniquement sur le convertisseur d'énergie, et le convertisseur d'énergie électromagnétique comprenant au moins :
- un aimant permanent (2) et
- un élément (6) mobile,
- une bobine (1) électrique
entourant au moins une partie de l'aimant permanent (2) ou de l'élément (6) mobile,
un déplacement de l'élément (6) mobile à partir d'une première position de repos, ou d'une seconde position de repos, entraînant une ouverture ou une fermeture d'un circuit magnétique formé par l'aimant permanent et l'élément mobile, et
l'élément (6) mobile étant maintenu par des forces magnétiques d'automaintien dans la première ou la seconde position de repos,
l'élément (6) mobile étant équipé d'un mécanisme de point mort, qui entraîne une ouverture ou une fermeture rapide du circuit magnétique dès qu'une force prédéfinie, agissant sur l'élément (6) mobile, est dépassée;
dans lequel des informations sur la façon d'actionnement sont détectées par le biais de la polarité et transmises en utilisant le signal radio.

13. Système selon la revendication 12, dans lequel l'émetteur radio comprend plusieurs dispositifs d'actionnement qui agissent tous sur le convertisseur d'énergie, et en plus sur des détecteurs pour la détection de chaque dispositif d'actionnement activé, et dans lequel les informations sur l'identité du panneau d'actionnement sont incorporées dans le signal radio à émettre.

14. Système selon les revendications 12 ou 13, dans lequel la façon d'actionnement comporte l'enfoncement ou la libération d'un commutateur à touche ou l'enfoncement des différentes surfaces d'actionnement d'un commutateur à bascule.
